# EUROPEAN PATENT APPLICATION

(11) **EP 4 534 424 A1**
(43) Date of publication of application: **09.04.2025**
(21) Application number: 23816002.2
(22) Date of filing: 29.05.2023
(51) Int. Cl.: B65B 3/26, B67C 3/28

(54) **CONTROLLER, CONTROL METHOD, AND PROGRAM**

(30) Priority: 31.05.2022 JP 2022088550
(71) Applicant: OMRON Corporation, Kyoto 600-8530 (JP)
(72) Inventor: MIMA, Koji, Moriya-shi, Ibaraki 302-0106 (JP); MIWA, Kazuya, Nagoya-shi, Aichi 463-0089 (JP); WATANABE, Toshiya, Nagoya-shi, Aichi 463-0089 (JP); HIRAKAWA, Tomohiro, Kyoto-shi, Kyoto 600-8530 (JP); HITOMI, Shigeru, Kyoto-shi, Kyoto 600-8530 (JP); AKIMOTO, Yukihiro, Kyoto-shi, Kyoto 600-8530 (JP); SUGIYAMA, Daiki, Kyoto-shi, Kyoto 600-8530 (JP)
(74) Representative: Hoffmann Eitle
(86) International application number: PCT/JP2023/019883
(87) International publication number: WO 2023/234245

(57) **Abstract**

A controller includes an acquisition unit, a prediction unit, and an adjustment unit. The acquisition unit acquires first data representing a measurement result of one or more parameters affecting a liquid amount in a container, and second data representing a measurement result of the liquid amount in the container. The prediction unit determines a predicted value of the liquid amount in the container, by inputting the first data and the second data to a prediction model generated by machine learning using one or more training data sets representing at least a record of the one or more parameters and a record of the liquid amount in the container. The adjustment unit adjusts an operating condition of a filling machine based on the predicted value. Thus, a dispersion of the liquid amount in the container is reduced.

## Description

### TECHNICAL FIELD

The present disclosure relates to a controller, a control method, and a program.

### BACKGROUND ART

Liquids that are exemplarily beverages such as beer, tea, and water are shipped in the state of filling respective containers. The liquid amount in the container is controlled to fall within a certain range. A container filled with a liquid amount out of the certain range is identified as a defective product. As the number of defective products increases, the production efficiency decreases. In view of this, Japanese Patent Laying-Open No. 2001-240004 (PTL 1) discloses a liquid filling device that controls a filling valve by a new set value calculated based on a measured value of the liquid amount in a container when there is a certain difference between the measured value and a preset value.

### CITATION LIST

### PATENT LITERATURE

PTL 1: Japanese Patent Laying-Open No. 2001-240004

### SUMMARY OF INVENTION

### TECHNICAL PROBLEM

The technique disclosed in PTL 1 does not change the operating condition of the filling valve until a certain difference occurs between the measured value and the preset value. Due to this, there has been a limitation on reduction of a dispersion of the liquid amount. Accordingly, there has also been a limitation on reduction of the production efficiency.

The present disclosure is made in view of the above problem, and an object of the present disclosure is to provide a controller, a control method, and a program that enable reduction of a dispersion of the liquid amount in the container.

### SOLUTION TO PROBLEM

A controller according to one aspect of the present disclosure controls a filling machine configured to fill a container with a liquid. The controller includes an acquisition unit, a prediction unit, and an adjustment unit. The acquisition unit is configured to acquire first data representing a measurement result of one or more parameters affecting a liquid amount in the container, and second data representing a measurement result of the liquid amount in the container. The prediction unit is configured to determine a predicted value of the liquid amount in the container, by inputting the first data and the second data to a prediction model generated by machine learning using one or more training data sets representing at least a record of the one or more parameters and a record of the liquid amount in the container. The adjustment unit is configured to adjust an operating condition of the filling machine based on the predicted value.

According to the present disclosure, the prediction model receives not only the second data representing the measurement result of the liquid amount but also the first data representing the measurement result of one or more parameters affecting the liquid amount in the container, and outputs the predicted value of the liquid amount in the container to be filled with the liquid in the future. The prediction accuracy of the prediction model is therefore high. Accordingly, a dispersion of the liquid amount in the container can be reduced by adjusting the operating condition of the filling machine based on the predicted value.

In the above disclosure, each of the one or more training data sets represents an average of each of the one or more parameters in a first period, an average of the liquid amount in the container filled with the liquid in the first period, and an average of the liquid amount in the container filled with the liquid in a second period later than the first period. The first data represents an average of each of the one or more parameters in a target period equal in time length to the first period. The second data represents an average of the liquid amount in the container filled with the liquid in the target period.

The measurement results of the one or more parameters and the liquid amount include noise components. However, according to the above disclosure, the first data representing the average of each of the one or more parameters in the target period and the second data representing the average of the liquid amount in the container filled with the liquid in the target period are used, and therefore, influences of fluctuation of the noise components included in the measurement results of the one or more parameters and the liquid amount are suppressed. Accordingly, the prediction accuracy of the prediction model is further improved, and the dispersion of the liquid amount in the container is further reduced.

In the above disclosure, the one or more parameters include at least one of a parameter relating to operation of the filling machine, a parameter relating to an external environment of the filling machine, and a parameter relating to a property of the liquid. According to the above disclosure, the prediction accuracy of the prediction model is further improved.

In the above disclosure, a learning algorithm of a tree structure may be used as the machine learning, for example.

A control method for controlling a filling machine configured to fill a container with a liquid, according to one aspect of the present disclosure, includes first to third steps. The first step is the step of acquiring first data representing a measurement result of one or more parameters affecting a liquid amount in the container, and second data representing a measurement result of the liquid amount in the container. The second step is the step of determining a predicted value of the liquid amount in the container, by inputting the first data and the second data to a prediction model generated by machine learning using one or more training data sets representing at least a record of the one or more parameters and a record of the liquid amount in the container. The third step is the step of adjusting an operating condition of the filling machine based on the predicted value.

A program according to one aspect of the present disclosure causes a computer to perform the control method described above. According to the disclosure of the above, a dispersion of the liquid amount in the container can also be reduced.

### ADVANTAGEOUS EFFECTS OF INVENTION

According to the present disclosure, a dispersion of the liquid amount in the container can be reduced.

### BRIEF DESCRIPTION OF DRAWINGS

Fig. 1 is a schematic diagram showing a system according to an embodiment.
Fig. 2 is a diagram showing an example of a configuration of a filling facility.
Fig. 3 is a schematic cross-sectional view showing an example of a structure of a filling valve.
Fig. 4 is a block diagram showing an example hardware configuration of a controller according to an embodiment.
Fig. 5 is a block diagram showing an example hardware configuration of a learning device according to an embodiment.
Fig. 6 is a diagram showing an example of a functional configuration of the learning device.
Fig. 7 is a diagram illustrating a process of a collection unit.
Fig. 8 is a diagram showing training data sets.
Fig. 9 is a diagram showing an example of a functional configuration of a controller.
Fig. 10 is a diagram illustrating a process of the controller.
Fig. 11 is a diagram showing a dispersion of the liquid amount.
Fig. 12 is a diagram showing an example of a screen displayed on a display device based on screen data generated by a screen data generation unit.

### DESCRIPTION OF EMBODIMENTS

Embodiments of the present invention are described in detail with reference to the drawings. In the drawings, the same or corresponding parts are denoted by the same reference characters, and a description thereof is not herein repeated.

### <A. Application Example>

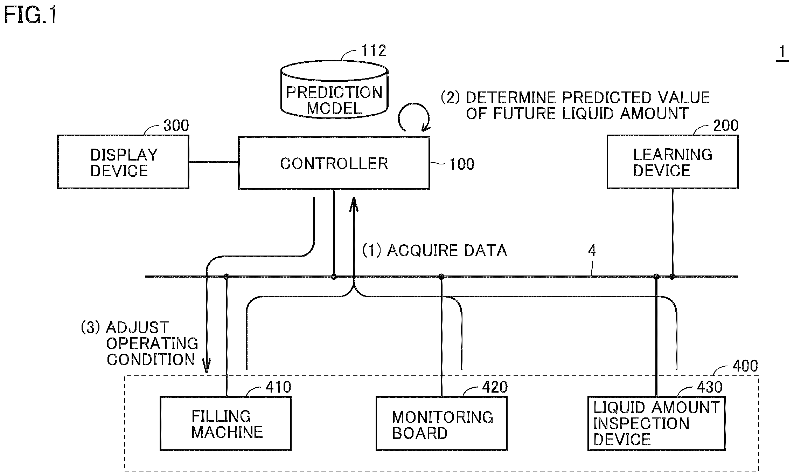

An example of a situation to which the present invention is applied is described with reference to Fig. 1. Fig. 1 is a schematic diagram showing a system according to an embodiment. A system 1 shown in Fig. 1 includes a controller 100, a learning device 200, a display device 300, and a filling facility 400. Controller 100, learning device 200, and filling facility 400 are communicably connected to each other by a field bus 4.

Filling facility 400 fills a container with a liquid. Examples of the liquid include beer, fizzy beverages other than beer, juices, teas, water, alcoholic beverages other than beer, seasonings, oils, chemicals, pharmaceuticals, cosmetics, and the like.

Filling facility 400 includes a filling machine 410, a monitoring board 420, and a liquid amount inspection device 430.

Filling machine 410 causes a container to be filled with a liquid. Monitoring board 420 monitors the external environment of filling machine 410 and the state of the liquid, for example. Liquid amount inspection device 430 measures the liquid amount in the container. The liquid amount in the container is referred to as "fill level" in some cases.

Learning device 200 operates in a learning phase to generate a prediction model 112 by machine learning using one or more training data sets representing at least a record of one or more parameters affecting the liquid amount in the container and a record of the liquid amount in the container. The learning phase is set as a period of a test run of filling facility 400 or a certain period after filling facility 400 is actuated.

The one or more parameters include, for example, parameters relating to operation of filling machine 410, parameters relating to the external environment of filling machine 410, parameters relating to the properties of the liquid, and the like, and are acquired from filling machine 410 and monitoring board 420. A record of the liquid amount in the container is acquired from liquid amount inspection device 430. Prediction model 112 generated in the learning phase is provided to controller 100.

In an application phase after the learning phase, controller 100 performs the following steps (1) to (3) as a process of controlling filling machine 410.
Step (1): Acquire first data representing a measurement result of the one or more parameters and second data representing a measurement result of the liquid amount in the container.
Step (2): Determine a predicted value of the liquid amount in the container, by inputting the first data and the second data to prediction model 112.
Step (3): Adjust an operating condition of filling machine 410 based on the predicted value.

Display device 300 is connected to controller 100, and displays a screen indicating a status of control by controller 100.

In system 1 according to the present embodiment, a predicted value of the liquid amount is determined by means of prediction model 112, and the operating condition of filling machine 410 is adjusted based on the predicted value. Accordingly, a dispersion of the liquid amount in the container is reduced.

### <B. Filling Facility>

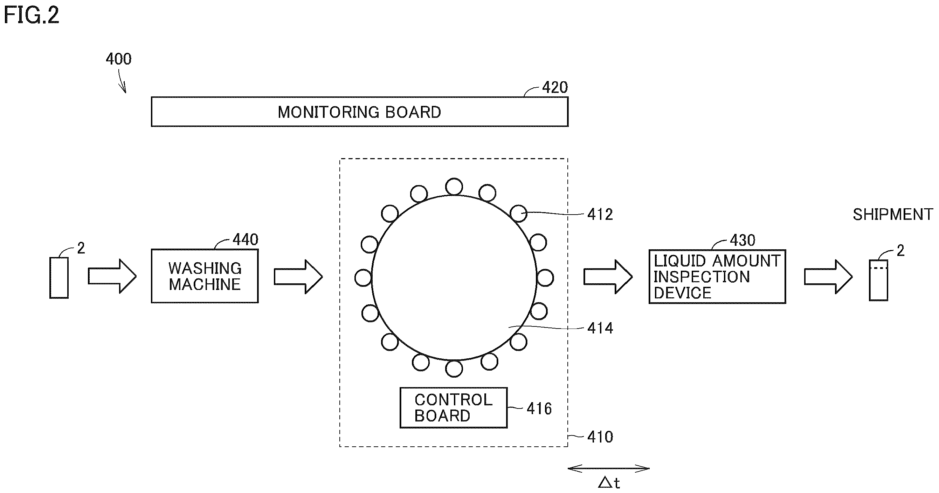

Fig. 2 is a diagram showing an example of a configuration of the filling facility. As shown in Fig. 2, filling facility 400 includes filling machine 410, monitoring board 420, liquid amount inspection device 430, and a washing machine 440.

Washing machine 440 washes a container 2. Examples of container 2 include can, bottle, PET (polyethylene terephthalate) bottle, barrel, paper pack, and pouch. Container 2 washed by washing machine 440 is conveyed to filling machine 410.

Filling machine 410 includes a rotary member 414 that is driven to rotate, a plurality of filling valves 412 arranged at regular intervals on the circumference of rotary member 414, and a control board 416 serving as a control board of filling machine 410.

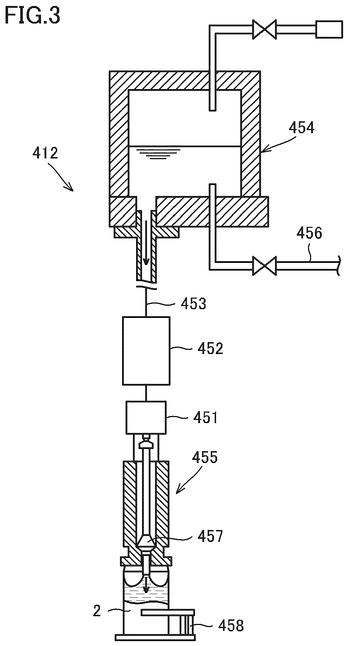

Fig. 3 is a schematic cross-sectional view showing an example of a structure of a filling valve. Filling valve 412 includes an air cylinder 451, a flowmeter 452, a liquid feeding pipe 453, a head tank 454, and a nozzle portion 455. Head tank 454 and nozzle portion 455 are connected to each other by liquid feeding pipe 453. Flowmeter 452 is disposed on liquid feeding pipe 453. Head tank 454 stores a liquid supplied from a surge tank (not shown) through a liquid feeding pipe 456. Nozzle portion 455 has a flow path through which the liquid supplied from head tank 454 through liquid feeding pipe 453 flows to a filling port, and a liquid valve 457 disposed in the flow path.

Control board 416 (see Fig. 2) causes liquid valve 457 to open or close. Thus, the liquid is supplied from the filling port to fill container 2 held by a container holder 458. Control board 416 causes liquid valve 457 to close at a timing when an amount measured by flowmeter 452 reaches a preset target flow rate.

Control board 416 can receive a correction value from controller 100. Receiving the correction value, control board 416 corrects the target flow rate by the correction value.

Container 2 filled with the liquid is discharged from container holder 458 into a can-feed chain (not shown), conveyed to a sealing device (not shown), and sealed by the sealing device with means appropriate for the container, such as can lid, crown, cap, or the like.

Control board 416 outputs values of parameters relating to operation of filling machine 410. The parameters relating to operation of filling machine 410 include, for example, a flow rate measured by flowmeter 452, a time difference from the time liquid valve 457 is opened to the time flowmeter 452 starts counting ("liquid valve opening delay time"), and a time difference from the time liquid valve 457 is closed to the time flowmeter 452 finishes counting ("liquid valve closing delay time").

Monitoring board 420 shown in Fig. 2 monitors the external environment of filling machine 410 and the state of the liquid, for example. Specifically, monitoring board 420 measures parameters relating to the external environment of filling machine 410, and parameters relating to the properties of the liquid, for example, and outputs the measurement results to controller 100. The parameters relating to the external environment of filling machine 410 include the outside air temperature and the temperature of rinser water used in washing machine 440, for example. The parameters relating to the properties of the liquid include the liquid temperature, for example.

Liquid amount inspection device 430 measures the liquid amount in container 2 filled with the liquid. Liquid amount inspection device 430 outputs the measurement result of the liquid amount for each container 2. The liquid amount is represented by volume, weight, liquid level, or the like. As liquid amount inspection device 430, a known inspection device may be used. For example, liquid amount inspection device 430 is configured as an X-ray line sensor, a digital camera, a video camera, a line sensor camera, a weight checker, or the like. In the case where container 2 is an opaque can, liquid amount inspection device 430 is configured as an X-ray line sensor. For example, liquid amount inspection device 430 outputs, as a liquid amount, a difference between the liquid level in container 2 measured by the X-ray line sensor and a predetermined reference level. In the case where container 2 is transparent like a bottle, liquid amount inspection device 430 may measure the liquid amount using an image obtained by a digital camera, a video camera, or the like.

Liquid amount inspection device 430 measures the liquid amount in container 2 after a time Δt has elapsed from the time container 2 was filled with the liquid by filling machine 410.

### <C. Hardware Configuration of Controller>

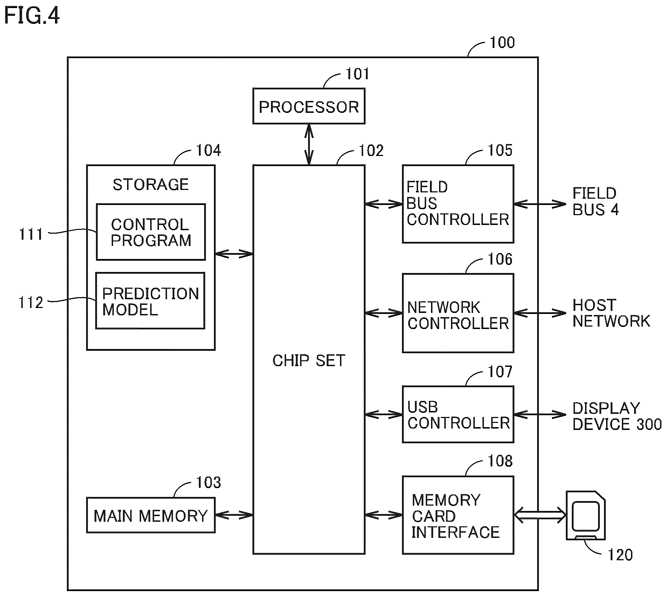

Fig. 4 is a block diagram showing an example hardware configuration of the controller according to an embodiment. Controller 100 is configured as, for example, a PLC (Programmable Logic Controller) or an IPC (Industrial Personal Computer). As shown in Fig. 4, controller 100 includes a processor 101 such as CPU (Central Processing Unit) or MPU (Micro-Processing Unit), a chip set 102, a main memory 103, a storage 104, a field bus controller 105, a network controller 106, a USB controller 107, and a memory card interface 108.

Processor 101 reads various programs stored in storage 104, deploys the programs in main memory 103, and executes the programs, to thereby implement control operations for controlling a target to be controlled. Chip set 102 controls, for example, data transmission between processor 101 and each component.

In storage 104, a control program 111 and prediction model 112 generated by learning device 200 are stored. Control program 111 includes a group of instructions for performing collection of various data from filling facility 400, calculation for controlling filling machine 410, and output of data to filling facility 400, for example.

Field bus controller 105 controls exchange of data, through field bus 4, with filling facility 400 which is a target to be controlled.

Network controller 106 controls exchange of data with various devices through a host network.

USB controller 107 controls data exchange with an external device (for example, display device 300) through a USB connection.

Memory card interface 108 is configured in such a manner that allows memory card 120 to be attached or detached, and capable of writing data to memory card 120 and reading various data (such as control program 111) from memory card 120.

While Fig. 4 shows a configuration example where necessary processes are provided through execution of a program(s) by processor 101, a part or all of the provided processes may be implemented by one or more dedicated hardware circuits (for example, ASIC, FPGA, or the like). Alternatively, a main component of controller 100 may be implemented by hardware conforming to a general-purpose architecture (for example, an industrial personal computer based on a general-purpose personal computer). In this case, a plurality of OSs having different uses may be executed in parallel by means of the virtualization technology, and a necessary application may be executed on each OS. Moreover, a database management system which is software for database management is stored in storage 104, and the database management system may be used for information processing by controller 100.

### <D. Hardware Configuration of Learning Device>

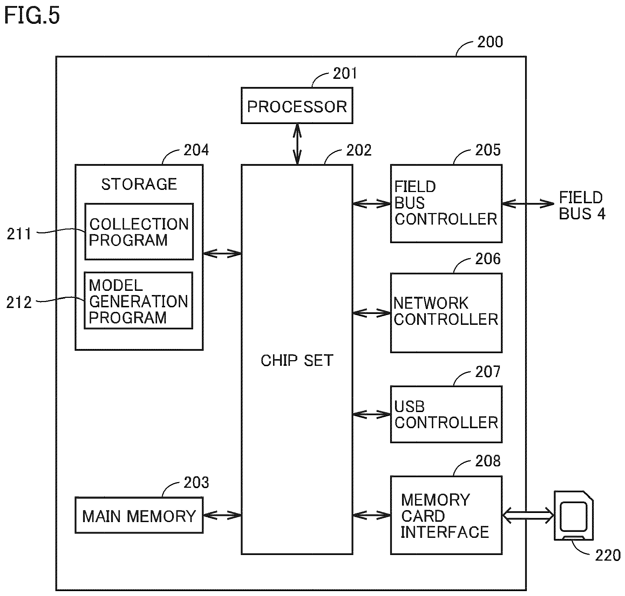

Fig. 5 is a block diagram showing an example hardware configuration of the learning device according to an embodiment. Learning device 200 is configured, for example, as an IPC, a general-purpose computer device, or the like. As shown in Fig. 5, learning device 200 includes a processor 201 such as CPU or MPU, a chip set 202, a main memory 203, a storage 204, a field bus controller 205, a network controller 206, a USB controller 207, and a memory card interface 208.

Processor 201 reads various programs stored in storage 204, deploys the programs in main memory 203, and executes the programs, to thereby implement control operations for controlling a target to be controlled. Chip set 202 controls, for example, data transmission between processor 201 and each component.

In storage 204, a collection program 211 for collecting various data from filling facility 400 and a model generation program 212 are stored.

Field bus controller 205 controls exchange of data with filling facility 400 through field bus 4.

Network controller 206 controls exchange of data with various devices through a network. USB controller 207 controls data exchange with an external device through a USB connection.

Memory card interface 208 is configured in such a manner that allows memory card 220 to be attached or detached, and capable of writing data to memory card 220 and reading various data from memory card 220.

While Fig. 5 shows a configuration example where necessary processes are provided through execution of a program(s) by processor 201, a part or all of the provided processes may be implemented by one or more dedicated hardware circuits (for example, ASIC, FPGA, or the like). Alternatively, a main component of learning device 200 may be implemented by hardware conforming to a general-purpose architecture (for example, an industrial personal computer based on a general-purpose personal computer). In this case, a plurality of OSs having different uses may be executed in parallel by means of the virtualization technology, and a necessary application may be executed on each OS.

### <E. Functional Configuration of Learning Device>

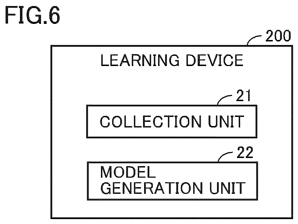

Fig. 6 is a diagram illustrating an example of a functional configuration of the learning device. As shown in Fig. 6, learning device 200 includes a collection unit 21 and a model generation unit 22. Collection unit 21 is implemented through execution of collection program 211 by processor 201 shown in Fig. 5. Model generation unit 22 is implemented through execution of model generation program 212 by processor 201.

Collection unit 21 collects, from filling facility 400, a value(s) of one or more parameters affecting the liquid amount in container 2 and a value of the liquid amount in container 2, for each container.

Model generation unit 22 generates prediction model 112 by machine learning using one or more training data sets representing a record of the one or more parameters and a record of the liquid amount in container 2.

Model generation unit 22 extracts one or more training data sets from the values of the one or more parameters and the liquid amount for each container 2, collected by collection unit 21.

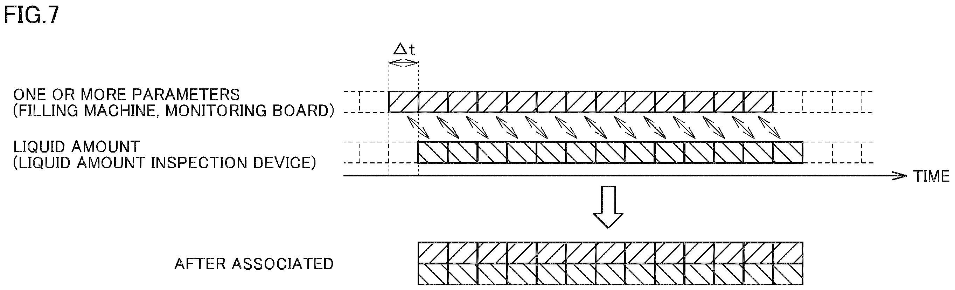

Fig. 7 is a diagram showing data collected by the collection unit. As shown in Fig. 7, collection unit 21 collects, for each of a plurality of filling valves 412, a value(s) of one or more parameters relating to filling valve 412, from filling machine 410 and monitoring board 420. For each filling valve of a plurality of filling valves 412, collection unit 21 collects a value of the liquid amount in container 2 filled with the liquid by this filling valve 412, from liquid amount inspection device 430. As described above with reference to Fig. 2, the time that has elapsed from the time container 2 was filled with the liquid by filling machine 410 to the time the liquid amount in container 2 is measured is Δt. That is, for a certain container 2, the time difference between the timing at which the value(s) of one or more parameters is (are) collected when container 2 is filled with the liquid, and the timing at which the value of the liquid amount in container 2 is collected is Δt. Therefore, model generation unit 22 performs a process of associating the value(s) of one or more parameters with the value of the liquid amount, for each container 2, as a pre-process for extracting a training data set.

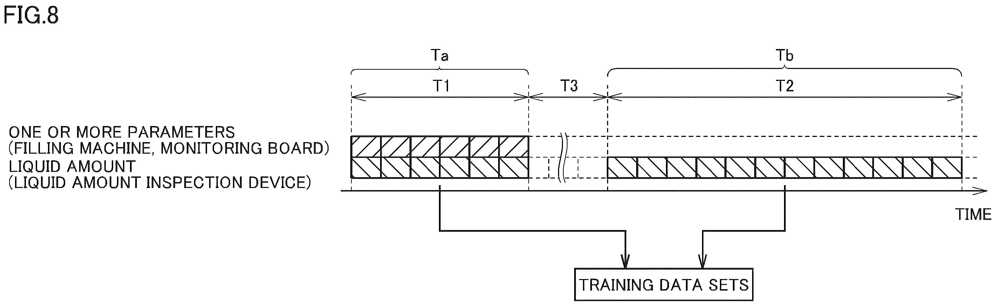

Fig. 8 is a diagram showing training data sets. A training data set is generated for each of a plurality of filling valves 412. The training data set represents explanatory variables and response variables. The explanatory variables include an average of each of one or more parameters relating to a corresponding filling valve 412 in a first period Ta having a certain time length T1 and an average of the liquid amount in container 2 filled with the liquid by the corresponding filling valve 412 in first period Ta. The response variables include an average of the liquid amount in container 2 filled with the liquid by the corresponding filling valve 412 in a second period Tb (having a time length T2) after a predetermined time T3 from the end timing of first period Ta. Model generation unit 22 extracts one or more training data sets different from each other in the start timing of first period Ta. Model generation unit 22 may extract a plurality of training data sets in such a manner that a part of first period Ta of a training data set overlaps with first period Ta of another training data set, or may extract a plurality of training data sets in such a manner that respective first periods Ta do not overlap with each other.

Time lengths T1 and T2 and time T3 are set appropriately depending on filling facility 400, the type of the liquid, and the type of container 2, for example. Time length T1 is, for example, 10 seconds, 30 seconds, 1 minute, 5 minutes, 10 minutes, 30 minutes, 1 hour, or the like. Time length T2 is the sum of time length T1 and time T3. Time T3 is longer than the time required to determine the correction value for the target flow rate and to reflect the correction value on filling machine 410, and is, for example, 30 seconds, 45 seconds, 1 minute, or the like.

Model generation unit 22 generates prediction model 112 by performing machine learning using one or more training data sets. Model generation unit 22 generates one prediction model 112 common to a plurality of filling valves 412. Alternatively, model generation unit 22 may generate prediction model 112 for each of a plurality of filling valves 412.

The generated prediction model 112 is sent to controller 100. For example, model generation unit 22 may transmit the generated prediction model 112 to controller 100 through network controller 206 or USB controller 207. Alternatively, prediction model 112 may store prediction model 112 in memory card 220 through memory card interface 208. In this case, a user may install prediction model 112 in controller 100 by connecting memory card 220 to controller 100.

Prediction model 112 receives input of first data representing a measurement result of one or more parameters affecting the liquid amount in container 2 and second data representing a measurement result of the liquid amount in container 2, and outputs a predicted value of the liquid amount in container 2 to be filled with the liquid in the future.

As a learning algorithm, a known algorithm such as support vector regression, deep learning, or a learning algorithm of a tree structure (for example, random forest) may be employed. A learning algorithm that provides a high prediction accuracy of prediction model 112 may be used. The prediction accuracy is represented, for example, by a mean square error of a difference between a predicted value and a record value.

The prediction accuracy for filling facility 400 using beer as the liquid has been confirmed and it has been found that the prediction accuracy of prediction model 112 generated by machine learning using the random forest which is a learning algorithm of a tree structure is superior to the prediction accuracy of the support vector regression and that of the deep learning. Therefore, it is preferable to use a learning algorithm of a tree structure (for example, random forest).

In the case of machine learning using the random forest, the capacity of prediction model 112 depends on the number of trees and the depth of the trees. Therefore, machine learning is performed with a limited number of trees and a limited depth of the trees to reduce the capacity of prediction model 112. Accordingly, the time required to predict the liquid amount using prediction model 112 is shortened.

### <F. Functional Configuration of Controller>

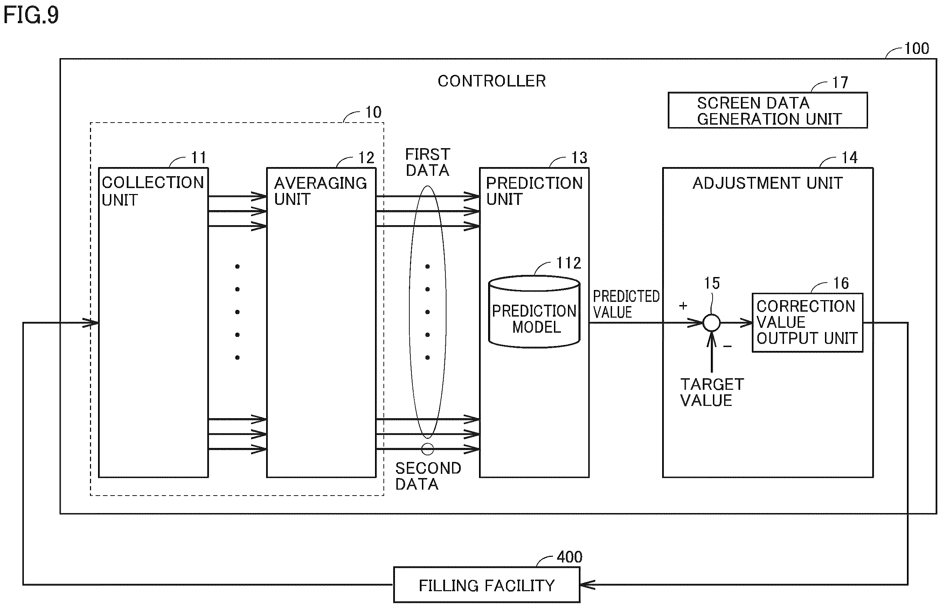

Fig. 9 is a diagram showing an example of a functional configuration of the controller. As shown in Fig. 9, controller 100 includes an acquisition unit 10, a prediction unit 13, an adjustment unit 14, and a screen data generation unit 17. Acquisition unit 10, prediction unit 13, adjustment unit 14, and screen data generation unit 17 are implemented through execution of control program 111 by processor 101 shown in Fig. 4.

Acquisition unit 10 acquires first data representing a measurement result of one or more parameters affecting the liquid amount in container 2, and second data representing a measurement result of the liquid amount in container 2. Acquisition unit 10 acquires the first data and the second data for each of a plurality of filling valves 412. That is, the first data represents a measurement result of one or more parameters affecting the liquid amount in container 2 filled with the liquid by a corresponding filling valve 412. The second data represents a measurement result of the liquid amount in container 2 filled with the liquid by the corresponding filling valve 412. As shown in Fig. 9, acquisition unit 10 includes a collection unit 11 and an averaging unit 12.

For each container 2, collection unit 11 collects, from filling facility 400, a measured value(s) of one or more parameters affecting the liquid amount in container 2 and a measured value of the liquid amount in container 2.

For each filling valve of a plurality of filling valves 412, averaging unit 12 calculates, for each target period, an average of each of one or more parameters relating to this filling valve 412 in the target period, and calculates an average of the liquid amount in container 2 filled with the liquid by this filling valve 412 in the target period. The target period has time length T1 of first period Ta shown in Fig. 8.

For each of a plurality of filling valves 412, averaging unit 12 outputs, as the first data, data representing an average of each of one or more parameters in the target period, and outputs, as the second data, data representing an average of the liquid amount in container 2 filled with the liquid in the target period.

For each of a plurality of filling valves 412, prediction unit 13 inputs the first data and the second data to prediction model 112 to thereby determine a predicted value of the liquid amount in container 2. Specifically, prediction unit 13 determines a predicted value of the liquid amount in container 2 filled with the liquid in the future, i.e., in a correction period after the elapse of time T3. The correction period has time length T2 of second period Tb shown in Fig. 8.

Adjustment unit 14 adjusts an operating condition of filling machine 410 for each of a plurality of filling valves 412, based on the predicted value. Specifically, adjustment unit 14 adjusts the operating condition of filling machine 410 based on the predicted value, in such a manner that causes the liquid amount in container 2 to approach the target value. In other words, adjustment unit 14 adjusts the operating condition of filling machine 410 based on the predicted value, in such a manner that makes the liquid amount in container 2 constant. As shown in Fig. 9, adjustment unit 14 includes a deviation calculation unit 15 and a correction value output unit 16.

Deviation calculation unit 15 calculates a deviation between the predicted value and a predetermined target value. Correction value output unit 16 calculates a correction value for the target flow rate in such a manner that causes the deviation to approach 0. Correction value output unit 16 outputs the calculated correction value to controller 100.

For example, correction value output unit 16 may calculate the correction value using a function having the deviation as an explanatory variable and the correction value as a response variable. The function is generated in advance based on experiments or simulations.

Screen data generation unit 17 generates screen data representing transition of the first data and the second data acquired by acquisition unit 10, and transition of the predicted value determined by prediction unit 13, for example. The generated screen data is transmitted to display device 300 through USB controller 107. Accordingly, a screen represented by the screen data is displayed on display device 300.

### <G. Example Process of Controller>

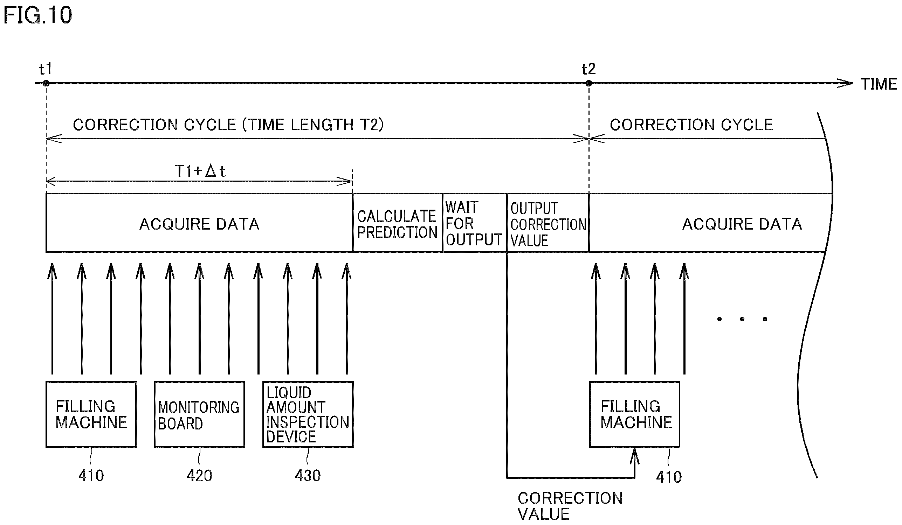

Fig. 10 is a diagram illustrating a process of the controller. As shown in Fig. 10, controller 100 repeatedly performs the same process for each correction cycle. The time length of the correction cycle is equal to time length T2 of second period Tb shown in Fig. 8. In the example shown in Fig. 10, the correction cycle starts at time t1, and the next correction cycle starts at time t2 after the elapse of time length T2 from time t1.

Processor 101 acquires the first data representing an average of each of one or more parameters collected in a target period of time length T1 from the start timing of the correction cycle. Further, processor 101 acquires the second data representing the measurement result of the liquid amount in container 2 filled with the liquid in the target period. As described above with reference to Fig. 2, the period from the time container 2 is filled with the liquid by filling machine 410 to the time the liquid amount in container 2 is measured is Δt. Therefore, the time required to acquire the first data and the second data is the sum of time length T1 and Δt. Processor 101 acquires the first data and the second data for each of a plurality of filling valves 412.

Next, processor 101 inputs the first data and the second data to prediction model 112 to determine a predicted value of the liquid amount in container 2 to be filled with the liquid in the next correction cycle. In the case where prediction model 112 is generated for each filling valve 412, processor 101 inputs the first data and the second data associated with this filling valve 412 to prediction model 112 associated with this filling valve 412, for each of a plurality of filling valves 412. Further, processor 101 calculates a correction value depending on a deviation between the predicted value and a predetermined target value. Processor 101 calculates the correction value for each of a plurality of filling valves 412.

Thereafter, processor 101 waits until the output timing of the correction value is reached. The output timing of the correction value is a time earlier than the start timing of the next correction cycle by a predetermined time. The predetermined time is determined in consideration of the time required to output the correction value and to reflect the correction value on filling machine 410.

When the output timing of the correction value is reached, processor 101 outputs the calculated correction value to filling machine 410. Processor 101 outputs, to filling machine 410, a valve ID for identifying each filling valve 412 and the correction value calculated for this filling valve 412 that are associated with each other. Control board 416 of filling machine 410 corrects the target flow rate for each of a plurality of filling valves 412, in accordance with the correction value received from controller 100.

### <H. Dispersion of Liquid Amount>

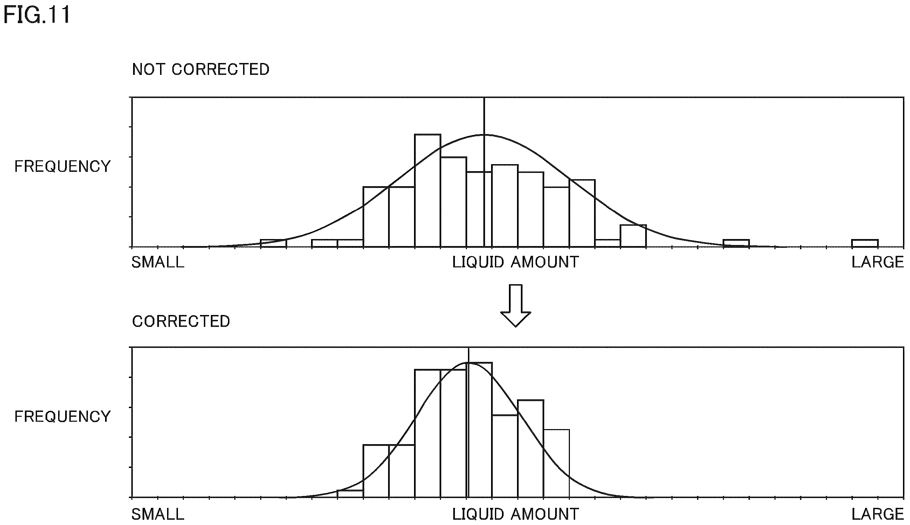

Fig. 11 is a diagram showing a dispersion of the liquid amount. The upper plot of Fig. 11 indicates a frequency distribution of the liquid amount, when operation of adjustment unit 14 is OFF, that is, when the target flow rate is not corrected. The lower plot of Fig. 11 indicates a frequency distribution of the liquid amount, when operation of adjustment unit 14 is ON, that is, when the target flow rate is corrected in accordance with the predicted value. As shown in Fig. 11, the target flow rate is corrected in accordance with the predicted value to reduce the dispersion of the liquid amount.

### <I. Example Screen>

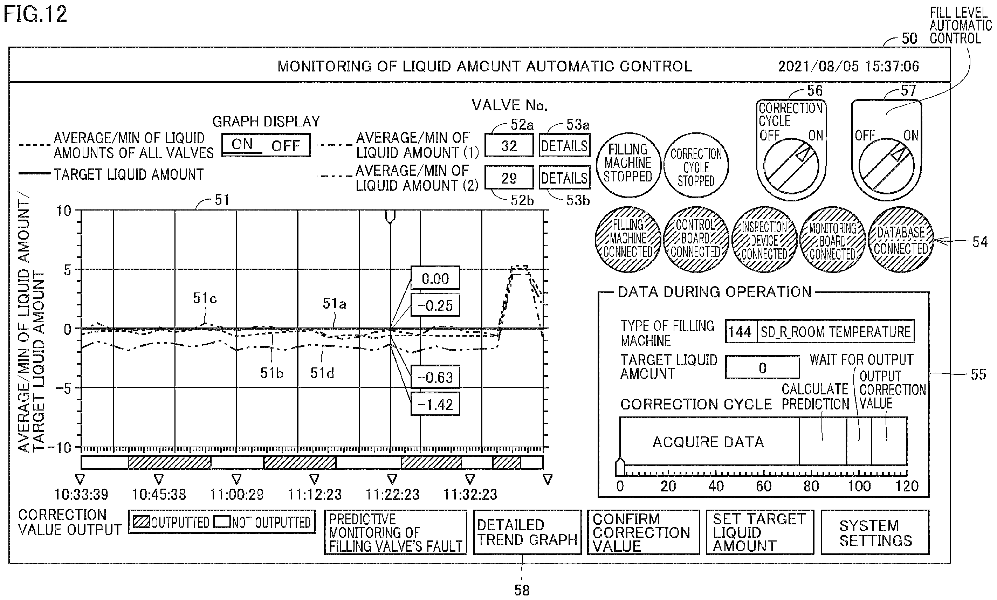

Fig. 12 is a diagram showing an example of a screen displayed on the display device based on screen data generated by the screen data generation unit. Fig. 12 shows a screen 50 for time lengths T1 and T2 shown in Fig. 8 that are 1 minute and 2 minutes, respectively. That is, the period of the correction cycle is 2 minutes (120 seconds). As shown in Fig. 12, screen 50 includes a graph 51, selection fields 52a and 52b, buttons 53a, 53b, and 58, a status indication lamp group 54, a display field 55, and switches 56 and 57.

A valve number for identifying a filling valve 412 selected from a plurality of filling valves 412 is input to selection field 52a, 52b.

Graph 51 includes four lines 51a to 51d. The horizontal axis of graph 51 represents time. Lines 51a to 51d are each a line connecting points for respective correction cycles. Each point of line 51a represents a target value of the liquid amount (referred to as "TARGET LIQUID AMOUNT" in the drawing) that is set for the corresponding correction cycle. Each point of line 51b represents an average of the measurement results of the liquid amounts in a plurality of containers 2 filled with the liquid by all of filling valves 412 in the target period of the corresponding correction cycle. Each point of line 51c represents an average of the measurement results of the liquid amounts in a plurality of containers 2 filled with the liquid by filling valve 412 that is input to selection field 52a, in the target period of the corresponding correction cycle. Each point of line 51d represents an average of the measurement results of the liquid amounts in a plurality of containers 2 filled with the liquid by filling valve 412 that is input to selection field 52b, in the target period of the corresponding correction cycle. In the example shown in Fig. 12, the liquid amount represents a difference between the liquid level in container 2 and a reference level.

A user can input the valve number of a desired filling valve 412 to selection field 52a, 52b to confirm, in graph 51, a transition of the liquid amount in container 2 filled with the liquid by this filling valve 412.

In response to pressing of button 53a, screen data generation unit 17 generates detailed screen data including detailed information regarding filling valve 412 of the valve number input to selection field 52a. In response to pressing of button 53b, screen data generation unit 17 generates detailed screen data including detailed information regarding filling valve 412 of the valve number input to selection field 52b. For example, the detailed screen data indicates, for the corresponding filling valve 412, a transition of a value of a parameter representing its operation, a transition of an average of the liquid amounts in a plurality of containers 2 filled with the liquid in the target period of the correction cycle, a transition of the predicted value, a transition of the correction value, and the like.

Status indication lamp group 54 includes a plurality of lamps indicating an operating status and a communication connection status of filling facility 400. In display field 55, the type of filling machine 410, the target value of the liquid amount (target liquid amount), and the correction cycle are displayed.

Switch 56 is operated to switch the operation of acquisition unit 10 and prediction unit 13 between valid and invalid. When switch 56 is switched to the ON state, acquisition unit 10 and prediction unit 13 start operations.

Switch 57 is operated to switch the operation of outputting the correction value by adjustment unit 14 between valid and invalid. When switch 57 is switched to the ON state, adjustment unit 14 starts its operation.

In response to pressing of button 58, screen data generation unit 17 generates screen data including a detailed trend graph relating to the liquid amount in container 2. For example, the trend graph indicates, for a plurality of filling valves 412, a transition of the measurement result of the liquid amount, a transition of the predicted value, a transition of the correction value, and a transition of one or more parameters affecting the liquid amount in container 2.

A user can grasp details of the status of filling facility 400 by checking screen 50 and screens displayed by operating respective buttons.

### <J. Advantages>

As seen from the foregoing, controller 100 according to the present embodiment controls filling machine 410 that fills container 2 with a liquid. Controller 100 includes acquisition unit 10, prediction unit 13, and adjustment unit 14. Acquisition unit 10 acquires first data representing a measurement result of one or more parameters affecting a liquid amount in container 2, and second data representing a measurement result of the liquid amount in container 2. Prediction unit 13 determines a predicted value of the liquid amount in container 2 to be filled with the liquid in the future, by inputting the first data and the second data to prediction model 112 generated by machine learning using one or more training data sets representing at least a record of the one or more parameters and a record of the liquid amount in container 2. Adjustment unit 14 adjusts an operating condition of filling machine 410 based on the predicted value, in such a manner that causes the liquid amount in container 2 to be constant.

Thus, the predicted value of the liquid amount is determined by means of prediction model 112, and the operating condition of filling machine 410 is adjusted based on the predicted value in such a manner that causes the liquid amount in the container to be constant. Prediction model 112 receives not only the second data representing the measurement result of the liquid amount but also the first data representing the measurement result of the one or more parameters affecting the liquid amount in container 2. Therefore, the prediction accuracy of prediction model 112 is high. Accordingly, a dispersion of the liquid amount in container 2 can be reduced.

Each of the one or more training data sets represents an average of each of the one or more parameters in first period Ta, an average of the liquid amount in container 2 filled with the liquid in first period Ta, and an average of the liquid amount in container 2 filled with the liquid in second period Tb later than first period Ta. The first data represents an average of each of the one or more parameters in a target period having the same time length T1 as first period Ta. The second data represents an average of the liquid amount in container 2 filled with the liquid in the target period.

The measurement results of the one or more parameters and the liquid amount include noise components. The first data representing the average of each of the one or more parameters in the target period and the second data representing the average of the liquid amount in container 2 filled with the liquid in the target period are used to thereby lessen the influence of fluctuation of the noise components. Thus, the prediction accuracy of prediction model 112 is further improved. Accordingly, a dispersion of the liquid amount in container 2 can be further reduced.

### <K. Modifications>

After the generation of prediction model 112 is completed, learning device 200 and field bus 4 may be disconnected from each other.

Learning device 200 may generate prediction model 112 for each type of filling machine 410, each type of liquid, and each type of container 2. A plurality of generated prediction models 112 are installed in controller 100. In this case, prediction unit 13 of controller 100 may select prediction model 112 appropriate for the type of filling machine 410, the type of liquid, and the type of container 2, from a plurality of prediction models 112, and predict the liquid amount in container 2 to be filled with the liquid in the future using selected prediction model 112.

Learning device 200 may generate a common prediction model 112 regardless of the type of liquid. In this case, learning device 200 may generate prediction model 112 by machine learning using a plurality of training data sets prepared when multiple types of liquids are used. Thus, controller 100 can use the common prediction model 112 regardless of the type of liquid. Accordingly, the capacity for storing prediction model 112 in the storage 104 of controller 100 can be reduced.

According to the foregoing, learning device 200 includes collection program 211. However, learning device 200 may not include collection program 211, and may generate one or more training data sets by performing data search of a database constructed in an external hardware device.

In the database constructed in an external hardware device, values of one or more parameters for each container 2 that are collected from filling machine 410 and monitoring board 420, as well as the value of the liquid amount for each container 2 collected from liquid amount inspection device 430 are accumulated in a learning phase. The accumulation of data in the database is performed by the external hardware device. Alternatively, the accumulation of data in the database may be performed by controller 100.

According to the foregoing, controller 100 is composed of one device including processor 101. However, controller 100 may be composed of a plurality of devices (for example, PLC and IPC) each including a processor. In this case, control program 111 shown in Fig. 4 is divided into a plurality of partial programs, and each of these partial programs is installed in a corresponding device among the plurality of devices.

For example, controller 100 may be composed of one PLC and one IPC. The PLC performs acquiring the first data and the second data, transmitting the first data and the second data to the IPC to acquire a predicted value from the IPC, and adjusting an operating condition of filling machine 410 based on the predicted value. The IPC includes prediction model 112, and inputs the first data and the second data received from the PLC to prediction model 112, to output a predicted value of the liquid amount in the container to be filled with the liquid in the future.

According to the foregoing, learning device 200 and controller 100 are separate devices. However, controller 100 may have the function of learning device 200 to generate prediction model 112.

### <L. Appendixes>

As seen from the foregoing, the present embodiment includes the following disclosure.

### (Configuration 1)

A controller (100) for controlling a filling machine (410) configured to fill a container (2) with a liquid, the controller including:
an acquisition unit (10, 101) configured to acquire first data representing a measurement result of one or more parameters affecting a liquid amount in the container (2) and second data representing a measurement result of the liquid amount in the container (2);
a prediction unit (13, 101) configured to determine a predicted value of the liquid amount in the container (2) by inputting the first data and the second data to a prediction model (112) generated by machine learning using one or more training data sets representing at least a record of the one or more parameters and a record of the liquid amount in the container (2); and
an adjustment unit (14, 101) configured to adjust an operating condition of the filling machine based on the predicted value.

### (Configuration 2)

The controller (100) according to Configuration 1, wherein
each of the one or more training data sets represents an average of each of the one or more parameters in a first period (Ta), an average of the liquid amount in the container (2) filled with the liquid in the first period (Ta), and an average of the liquid amount in the container (2) filled with the liquid in a second period (Tb) later than the first period (Ta),
the first data represents an average of each of the one or more parameters in a target period equal in time length to the first period (Ta), and
the second data represents an average of the liquid amount in the container (2) filled with the liquid in the target period.

### (Configuration 3)

The controller (100) according to Configuration 1 or 2, wherein the one or more parameters include at least one of a parameter relating to operation of the filling machine (410); a parameter relating to an external environment of the filling machine (410); and a parameter relating to a property of the liquid.

### (Configuration 4)

The controller (100) according to any one of Configurations 1 to 3, wherein the machine learning uses a learning algorithm of a tree structure.

### (Configuration 5)

A control method for controlling a filling machine (410) configured to fill a container (2) with a liquid, the control method including:
acquiring first data representing a measurement result of one or more parameters affecting a liquid amount in the container (2), and second data representing a measurement result of the liquid amount in the container (2);
determining a predicted value of the liquid amount in the container (2), by inputting the first data and the second data to a prediction model (112) generated by machine learning using one or more training data sets representing at least a record of the one or more parameters and a record of the liquid amount in the container (2); and,
adjusting an operating condition of the filling machine (410) based on the predicted value.

### (Configuration 6)

A program for controlling a filling machine (410) configured to fill a container (2) with a liquid, the program causing a computer to perform:
acquiring first data representing a measurement result of one or more parameters affecting a liquid amount in the container (2), and second data representing a measurement result of the liquid amount in the container (2);
determining a predicted value of the liquid amount in the container (2), by inputting the first data and the second data to a prediction model (112) generated by machine learning using one or more training data sets representing at least a record of the one or more parameters and a record of the liquid amount in the container (2); and
adjusting an operating condition of the filling machine (410) based on the predicted value.

### (Configuration 7)

The controller (100) according to any one of Configurations 1 to 4, wherein the adjustment unit (14, 101) is configured to adjust the operating condition of the filling machine (410) in such a manner that causes the liquid amount in the container (2) to approach a target value.

### (Configuration 8)

The controller (100) according to any one of Configurations 1 to 4, wherein the adjustment unit (14, 101) is configured to adjust the operating condition of the filling machine (410) in such a manner that causes the liquid amount in the container (2) to be constant.

As to the above description of the embodiments of the present invention, it should be construed that the embodiments disclosed herein are given by way of illustration in all respects, not by way of limitation. It is intended that the scope of the present invention is defined by claims, and encompasses all modifications and variations equivalent in meaning and scope to the claims.

### REFERENCE SIGNS LIST

1 system; 2 container; 4 field bus; 10 acquisition unit; 11, 21 collection unit; 12 averaging unit; 13 prediction unit; 14 adjustment unit; 15 deviation calculation unit; 16 correction value output unit; 17 providing unit; 22 model generation unit; 50 screen; 51 graph; 51a-51d line graph; 52a, 52b selection fields; 53a, 53b, 58-62 button; 54 status indication lamp group; 55 display field; 56, 57 switch; 100 controller; 101, 201 processor; 102, 202 chip set; 103, 203 main memory; 104, 204 storage; 105, 205 field bus controller; 106, 206 network controller; 107, 207 USB controller; 108, 208 memory card interface; 111 control program; 112 prediction model; 120, 220 memory card; 200 learning device; 211 collection program; 212 model generation program; 300 display device; 400 filling facility; 410 filling machine; 412 filling valve; 414 rotary member; 416 control board; 420 monitoring board; 430 liquid amount inspection device; 440 washing machine; 451 air cylinder; 452 flowmeter; 453, 456 liquid feeding pipe; 454 head tank; 455 nozzle portion; 457 liquid valve; 458 container holder.

## Claims

1. A controller for controlling a filling machine configured to fill a container with a liquid, the controller comprising:
an acquisition unit configured to acquire first data representing a measurement result of one or more parameters affecting a liquid amount in the container, and second data representing a measurement result of the liquid amount in the container;
a prediction unit configured to determine a predicted value of the liquid amount in the container, by inputting the first data and the second data to a prediction model generated by machine learning using one or more training data sets representing at least a record of the one or more parameters and a record of the liquid amount in the container; and
an adjustment unit configured to adjust an operating condition of the filling machine based on the predicted value.

2. The controller according to claim 1, wherein
each of the one or more training data sets represents an average of each of the one or more parameters in a first period, an average of the liquid amount in the container filled with the liquid in the first period, and an average of the liquid amount in the container filled with the liquid in a second period later than the first period,
the first data represents an average of each of the one or more parameters in a target period equal in time length to the first period, and
the second data represents an average of the liquid amount in the container filled with the liquid in the target period.

3. The controller according to claim 1 or 2, wherein the one or more parameters include at least one of a parameter relating to operation of the filling machine, a parameter relating to an external environment of the filling machine, and a parameter relating to a property of the liquid.

4. The controller according to any one of claims 1 to 3, wherein the machine learning uses a learning algorithm of a tree structure.

5. A control method for controlling a filling machine configured to fill a container with a liquid, the control method comprising:
acquiring first data representing a measurement result of one or more parameters affecting a liquid amount in the container, and second data representing a measurement result of the liquid amount in the container;
determining a predicted value of the liquid amount in the container, by inputting the first data and the second data to a prediction model generated by machine learning using one or more training data sets representing at least a record of the one or more parameters and a record of the liquid amount in the container; and
adjusting an operating condition of the filling machine based on the predicted value.

6. A program for controlling a filling machine configured to fill a container with a liquid, the program causing a computer to perform:
acquiring first data representing a measurement result of one or more parameters affecting a liquid amount in the container, and second data representing a measurement result of the liquid amount in the container;
determining a predicted value of the liquid amount in the container, by inputting the first data and the second data to a prediction model generated by machine learning using one or more training data sets representing at least a record of the one or more parameters and a record of the liquid amount in the container; and
adjusting an operating condition of the filling machine based on the predicted value.
